Europäisches Patentamt

European Patent Office

Office européen des brevets

(19)

(11) **EP 0 582 874 B1**

(12) **EUROPÄISCHE PATENTSCHRIFT**

(45) Veröffentlichungstag und Bekanntmachung des Hinweises auf die Patenterteilung:
**23.09.1998 Patentblatt 1998/39**

(51) Int Cl.6: **H04B 10/18**, H04B 1/62

(21) Anmeldenummer: **93111795.6**

(22) Anmeldetag: **23.07.1993**

(54) **Schaltungsanordnung zur frequenzabhängigen Kompensation des Klirrens zweiter Ordnung in einem Übertragungssystem**

Circuit for frequency-dependent compensation of second order distortion in a transmission system

Circuit pour la compensation de la distorsion du second ordre en fonction de la fréquence dans un système de transmission

(84) Benannte Vertragsstaaten:
**CH DE FR GB IT LI NL**

(30) Priorität: **11.08.1992 DE 4226494**

(43) Veröffentlichungstag der Anmeldung:
**16.02.1994 Patentblatt 1994/07**

(73) Patentinhaber: **ALCATEL ALSTHOM COMPAGNIE GENERALE D'ELECTRICITE**
**75008 Paris (FR)**

(72) Erfinder: **Steigenberger, Ulrich**
**D-70565 Stuttgart (DE)**

(74) Vertreter: **Schätzle, Albin, Dipl.-Phys. et al**
**Alcatel Alsthom**
**Intellectual Property Department,**
**Postfach 30 09 29**
**70449 Stuttgart (DE)**

(56) Entgegenhaltungen:
**EP-A- 0 486 953        DE-A- 4 014 796**

- **IEEE GLOBAL TELECOMMUNICATIONS CONFERENCE Bd. 1, Nr. 15 , 4. Dezember 1986 , HOUSTON,TX,US Seiten 547 - 553 IMAI ET AL 'High Power Amplifier Linearization for a Multi-Carrier Digital Microwave System'**

**Beschreibung**

Die Erfindung betrifft eine Schaltungsanordnung zur frequenzabhängigen Kompensation des Klirrens zweiter Ordnung in einem Übertragungssystem, das einen Treiberverstärker aufweist, welcher ein zu übertragendes Nutzsignal auf einen elektrischen oder optischen Sender intensitätsmoduliert, und bei dem der elektrische oder optische Sender dem Nutzsignal ein frequenzabhängiges Klirren zweiter Ordnung überlagert.

Ein derartiges Übertragungssystem ist bekannt. Es wird bspw. als CATV-Vielkanal-Übertragungssystem benutzt, bei dem der Treiberverstärker ein zu übertragendes amplitudenmoduliertes Vielkanal-Summensignal direkt auf eine Analog-DFB-Laserdiode intensitätsmoduliert. Bei der Umsetzung des modulierten Nutzsignals in das in die optische Übertragungsstrecke einzuspeisende Laserlicht wird diesem ein frequenzabhängiges Klirren überlagert, das durch die Nichtlinearität der P/I-Kennlinie der Analog-DFB-Laserdiode hervorgerufen wird. Das Klirren wird hierbei im wesentlichen von den Beiträgen zweiter Ordnung dominiert, welche bis zu 15dB und mehr gegenüber den Nichtlinearitäten dritter und höherer Ordnung überwiegen. Diese frequenzabhängigen Klirrprodukte zweiter Ordnung nehmen bei DFB-Lasern u.a. aufgrund der Laser-Relaxations-Eigenresonanz mit steigender Frequenz zu und können z.B. bei einem 450 MHz breiten Vielkanalübertragungssystem am oberen Bandende bis zu 10dB und mehr größer sein als am unteren.

Das dem Nutzsignal überlagerte Klirren zweiter Ordnung bringt in besonders nachteiliger Art und Weise mit sich, daß der bei den bekannten Vielkanal-Übertragungssystemen erreichbare Kanalmodulationsgrad beträchtlich unter dem durch die Clipping-Grenze bestimmten theoretisch erreichbaren Maximum bleibt, was mit einer erheblichen Reduktion der maximal erzielbaren Reichweite des Vielkanal-Übertragungssystems verbunden ist.

Aus der DE-A 33 38 797 ist eine Schaltungsanordnung zum Kompensieren von nichtlinearen Verzerrungen in einem Übertragungssystem bekannt, bei dem unter Verwendung eines nichtlinearen Verzerrers Verzerrungsprodukte erzeugt werden, die eine zur Kompensation der nichtlinearen Verzerrungen geeignete Phasenlage aufweisen. Hierzu ist vorgesehen, daß in den Signalweg ein Vier-Tor-Koppler geschaltet ist, dessen erstes Tor den Eingang der Schaltungsanordnung bildet. Ein zweites Tor des Vier-Tor-Kopplers ist derart abgeschlossen, daß es den an ihm auftretenden Signalanteil reflektiert. Eine dem dritten Tor zugeordnete Abschlußimpedanz enthält einen nichtlinearen Verzerrer. Ein viertes Tor des Vier-Tor-Kopplers bildet den Ausgang der Schaltungsanordnung, dem der vom zweiten Tor reflektierte Signalanteil und die vom nichtlinearen Verzerrer erzeugten Verzerrungsprodukte zugeführt werden, wobei die Phasenlage zwischen dem Signalanteil und den Verzerrungsprodukten einstellbar ist. Nachteilig an dieser bekannten Schaltungsanordnung ist, daß sie zur Kompensation des im Sender des Übertragungssystems, also im letzten Glied des senderseitigen Signalwegs, entstehenden Klirrens nicht einsetzbar ist: Die beschriebene Schaltungsanordnung erlaubt nämlich nur die Elementation von in vorgeschalteten Bauteilen des Übertragungssystems bereits entstandenen Verzerrungen.

Aus der DE-A 38 20 985 ist ein Verfahren und eine Anordnung zum Kompensieren der Intermodulationsverzerrungen in Funksystemen bekannt. Hierbei ist vorgesehen, daß die reale Sendeleistung des Senders detektiert wird und bei positiver Abweichung der detektierten Sendeleistung von der Nennsendeleistung die Verstärkung eines einem Intermodulations-Entzerrer vorgeschalteten Regelverstärkers hochgeregelt und bei negativer Sendeleistung-Abweichung die Verstärkung des Regelverstärkers heruntergeregelt wird.

Außerdem wird die Verstärkung eines dem Intermodulations-Entzerrer nachgeschalteten Regelverstärkers umgekehrt proportional zu der Verstärkung des dem Intermodulations-Entzerrer vorgeschalteten Regelverstärkers geändert. Nachteilig daran ist, daß die Verstärkung des Sendesignal-Leistungsverstärkers nicht konstant gehalten wird, wodurch Reichweiteschwankungen des übertragenen Signals auftreten. Derartige Reichweiteschwankungen sind aber in einem optischen Übertragungssystem nicht tolerabel, da stets garantiert sein muß, daß das vom Sender ausgestrahlte Laserlicht sicher und zuverlässig über die optische Übertragungsstrecke auch die Empfängerstationen erreicht. Die beschriebene Anordnung ist somit nur für Funkübertragungssysteme, nicht aber für optische oder elektrische Übertragungssysteme in geschlossenen Übertragungsstrecken einsetzbar.

Aus der DE-A 39 36 618 ist eine Linearisier-Steueranordnung bekannt, bei der eine Filter/Probenehmer-Anordnung das erwünschte Grundfrequenzsignal und dessen zweite Harmonische abtastet. Eine Steuerschaltung bildet das Verhältnis der Amplitude der zweiten Harmonischen dividiert durch die Amplitude des Grundfrequenzsignals und steuert einen Linearisierer zur steuerbaren Vorverzerrung derart, daß das Verhältnis zwischen diesen beiden Frequenzen minimiert wird. Auch diese bekannte Anordnung besitzt den Nachteil, daß sie nur die Reduktion von bereits im vorgeschalteten Signalweg entstandenen Verzerrungen ermöglicht, aber nicht das Entstehen von Verzerrungen in nachgeschalteten Bauteilen verhindert. Sie ist daher ebenfalls zur Klirrkompensation eines als letztes Bauteil des senderseitigen Übertragungssystems angeordneten elektrischen oder optischen Senders nicht geeignet.

Die Erfindung stellt sich daher die Aufgabe, eine Schaltungsanordnung der eingangs genannten Art dahingehend zu verbessern, daß das dem Nutzsignal überlagerte Klirren zweiter Ordnung einfach und effizient kompensiert wird.

Diese Aufgabe wird dadurch gelöst, daß als Treiberverstärker ein Gegentakt-Verstärker verwendet wird, der ein von der Frequenz des ihm zugeführten Nutzsignals abhängiges Verstärker-Klirren zweiter Ordnung erzeugt, und daß im Signalweg des Nutzsignals zwischen dem Gegentakt-Verstärker und dem Sender ein Anpassungsglied angeordnet ist, welches das vom Gegentakt-Verstärker gelieferte, mit einem frequenzabhängigen Verstärker-Klirren zweiter Ordnung überlagerte Nutzsignal zur Kompensation des Sender-Klirrens derart modifiziert, daß das frequenzabhängige Verstärker-Klirren zweiter Ordnung in Gegenphase mit den vom Sender erzeugten frequenzabhängigen Sender-Klirren zweiter Ordnung ist und in seinem Betrag mit diesem übereinstimmt.

Durch die erfindungsgemäßen Maßnahmen wird in besonders vorteilhafter Art und Weise eine Verbesserung des Klirrens zweiter Ordnung, insbesondere bei hohen Frequenzen, in der Größenordnung von bis zu 10dB erzielt. Die erfindungsgemäßen Maßnahmen sind insbesondere bei einem optischen Übertragungssystem von Vorteil, da die hierbei eingesetzten DFB-Laserdioden eine besonders hohe Frequenzabhängigkeit des Laser-Klirrens zweiter Ordnung aufweisen. Die Erfindung gestattet es nun in besonders vorteilhafter Art und Weise, daß das Laser-Klirren zweiter Ordnung durch die erfinderische Art und Weise seiner Kompensation drastisch gemindert bzw. vollständig kompensiert wird, so daß bei einem die erfinderische Schaltungsanordnung aufweisenden Übertragungssystem der erreichbare Kanalmodulationsgrad beträchtlich erhöht wird. Denn es treten keine aus dem Laser-Klirren zweiter Ordnung resultierenden Intermodulationsprodukte mehr auf, die den erreichbaren Kanalmodulationsgrad des Vielkanal-Übertragungssystems vor der Laser-Clipping-Grenze beschränken. Dies erlaubt es vorteilhafterweise, die DFB-Laserdiode mit einem höheren Kanalmodulationsindex zu betreiben, so daß ein leistungsstärkeres Laserwechsellicht in die optische Übertragungsstrecke eingespeist werden kann. Dadurch wird in vorteilhafter Art und Weise die maximal erzielbare Reichweite deutlich erhöht.

Eine vorteilhafte Weiterbildung der Erfindung sieht vor, daß der frequenzabhängigen Kompensation des Klirrens zweiter Ordnung eine frequenzunabhängige Kompensation desselben vorangeht, indem vor dem Gegentakt-Treiberverstärker eine Verzerrerstufe vorgeschaltet ist, die ein frequenzunabhängiges, aber betrags- und phasenmäßig einstellbares Kompensationssignal erzeugt. Durch die Kombination einer frequenzunabhängigen und einer frequenzabhängigen Kompensation des Klirrens zweiter Ordnung ist es in besonders vorteilhafter Weise möglich, diese beiden Komponenten derart abzustimmen, daß eine weitere Verbesserung der Gesamtlinearität der Übertragungskennlinie des Übertragungssystems erreicht wird.

Weitere vorteilhafte Weiterbildungen der Erfindung ergeben sich aus den Unteransprüchen.

Weitere Einzelheiten der Erfindung sind den Ausführungsbeispielen zu entnehmen, die im folgenden anhand der Zeichnungen beschrieben werden. Es zeigen:

Figur 1    ein erstes Ausführungsbeispiel der Schaltungsanordnung;

Figur 2    ein zweites Ausführungsbeispiel der Schaltungsanordnung.

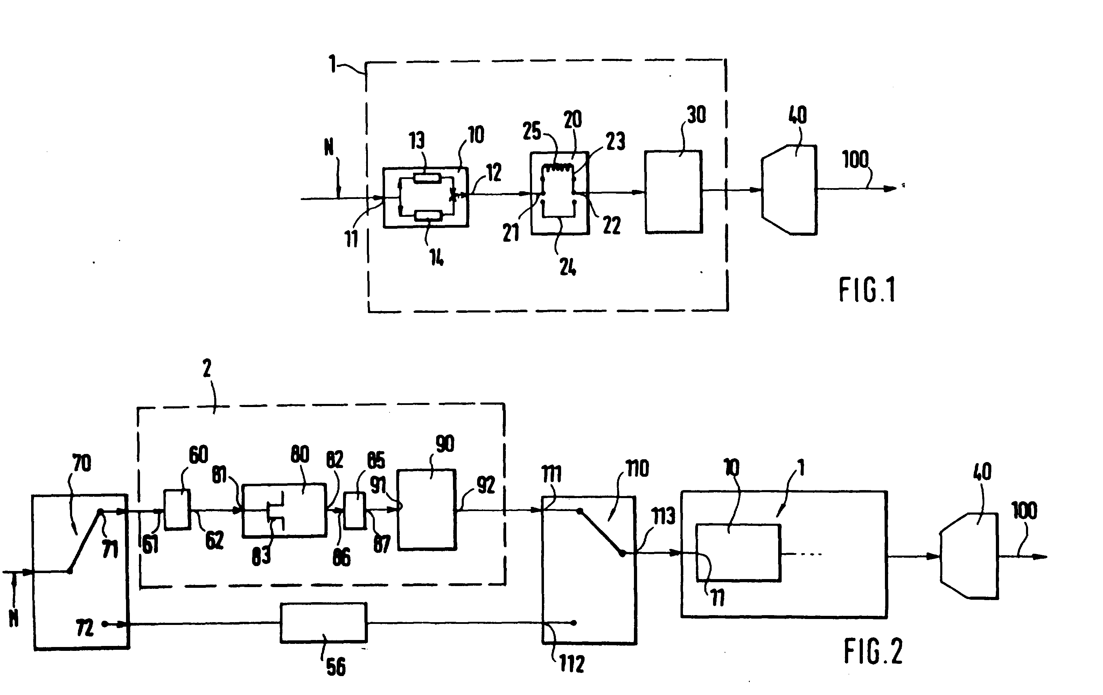

Das in Figur 1 dargestellte erste Ausführungsbeispiel einer Schaltungsanordnung zur Kompensation des Klirrens zweiter Ordnung in einem Übertragungssystem, insbesondere in einem Vielkanal-Übertragungssystem, weist einen Gegentakt-AB-Treiberverstärker 10 auf, dessen Eingang 11 ein über eine Analog-DFB-Laserdiode 40 in eine Übertragungsstrecke 100 einzuspeisendes analoges Nutzsignal N zugeführt wird. Ein Ausgang 12 des Gegentakt-AB-Treiberverstärkers 10 ist mit einem Eingang 21 eines Phasen-Anpassungsgliedes 20 verbunden,dessen Ausgang 22 mit einem Eingang 31 eines Klirrpegel-Anpassungsglied 30 in Verbindung steht. Dem Klirrpegel-Anpassungsglied 30 ist die Analog-DFB-Laserdiode 40 nachgeschaltet, welche ein von ihr emittiertes Laserlicht in die optische Übertragungsstrecke 100 einspeist.

Der vorzugsweise nach dem Doppel-Gegentaktprinzip (AB-Betrieb) arbeitende Gegentakt-Treiberverstärker 10 ist seinem prinzipiellen Aufbau nach bekannt, so daß es an dieser Stelle ausreicht, nur die für das Verständnis der Beschreibung des Ausführungsbeispiels erforderlichen Punkte aufzugreifen: Wichtig ist, daß der als relativ linearer Leistungs-Hybridverstärker aufgebaute Gegentakt-Treiberverstärker 10 ein frequenzabhängiges insbesondere über der Frequenz zunehmendes Verstärker-Klirren zweiter Ordnung erzeugt. Nach der zugrundeliegenden Theorie zeichnet sich ein derartiger Verstärker zwar durch seine guten Linearitätseigenschaften aus, da das Gegentakt-AB-Prinzip - zumindest theoretisch - unendlich gute Störabstände für das Klirren zweiter Ordnung erlaubt. Die Linearität des Verstärkers wird theoretisch nur durch Klirrprodukte dritter und höherer Ordnung, die durch Nichtlinearitäten dritter und höherer Ordnung der verwendeten Einzeltransistoren bedingt sind, begrenzt.

In der Praxis ist jedoch der Linearität des Gegentakt-AB-Treiberverstärkers 10 infolge der endlichen Paarungsgenauigkeit der verwendeten Halbleiter in den Gegentaktstufen und vor allem infolge der nicht perfekten Schaltungssymmetrie im Aufbau der Gegentaktstufen sowie des Ein- und Ausgangsübertragers Grenzen gesetzt. Einer der beiden - in Figur 1 nur schematisch dargestellten - Gegentaktstufen 13 und 14 des Gegentakt-AB-Treiberverstärkers 10 ist also im Klirren zweiter Ordnung gegenüber der anderen Gegentaktstufe dominant: Der Gegentakt-AB-Treiberverstärker 10 weist daher ebenfalls ein frequenzabhängiges Klirren zweiter Ordnung auf, welches mit steigender Frequenz zunimmt.

Dieses an sich unerwünschte Verstärker-Klirren zweiter Ordnung wird nun in besonders vorteilhafter Art und Weise zur Kompensation des von der Analog-DFB-Laserdiode 40 erzeugten Klirrens zweiter Ordnung verwendet.

Hierzu dient das zwischen dem Gegentakt-AB-Treiberverstärker 10 und der Analog-DFB-Laserdiode 40 geschaltete Phasen-Anpassungsglied 20 in Verbindung mit dem Klirrpegel-Anpassungsglied 30. Das Phasen-Anpassungsglied 20 bringt das vom Gegentakt-AB-Treiberverstärker 10 erzeugte Verstärker-Klirren in Gegenphase zu dem von der Analog-DFB-Laserdiode 40 erzeugten Laser-Klirren.

Im einfachsten Fall besteht das Phasen-Anpassungsglied 20 - wie in Figur 1 dargestellt - aus zwei Schaltern 21 und 22, durch die zwei Zweige 23 und 24 anwählbar sind. Im ersten Zweig 23 ist eine Spulenanordnung 25 vorgesehen, die eine Phasendrehung des Verstärker-Klirrens um 180° bewirkt. Im zweiten Zweig 24 des Phasen-Anpassungsgliedes 20 wird das Signal unverändert durchgelassen. Es ist aber auch möglich, das Phasen-Anpassungsglied 20 als Allpaß auszubilden, der gezielte Phasendrehungen um einen beliebigen Betrag erlaubt.

Im folgenden wird der Einfachheit halber davon ausgegangen, daß die Phasenlage zwischen dem Verstärker-Klirren und dem Laser-Klirren entweder Null oder 180° beträgt. Der allgemeinere Fall einer anderweitigen Phasenbeziehung zwischen den beiden vorgenannten Klirren ist für den Fachmann aus der folgenden Beschreibung dann ohne weiteres Nachdenken ableitbar.

Ist das Verstärker-Klirren mitphasig mit dem Laser-Klirren, so wird das vom Gegentakt-AB-Treiberverstärker 10 erzeugte Signal über den ersten Zweig 21 des Phasen-Anpassungsglieds 20 geleitet, in dem die Phasenlage des Verstärker-Klirrens invertiert wird. Ist das vom Gegentakt-AB-Treiberverstärker 10 erzeugte Verstärker-Klirren gegenphasig zu dem von der Analog-DFB-Laserdiode 40 erzeugten Laser-Klirren, so wird das vom Gegentakt-AB-Treiberverstärker 10 erzeugte Signal über den zweiten Zweig 22 geleitet, und es erfolgt im Phasen-Anpassungsglied keine Veränderung der Phasenlage.

Das Klirrpegel-Anpassungsglied 30 dient dazu, das Verstärker-Klirren betragsmäßig dem Laser-Klirren der Analog-DFB-Laserdiode 40 anzupassen.

In besonders vorteilhafter Art und Weise ist es durch das aus dem Phasen-Anpassungsglied 20 und dem Klirrpegel-Anpassungsglied 30 gebildetete Klirr-Anpassungsglied also möglich, den Gegentakt-AB-Treiberverstärker 10 und den Analog-DFB-Laser 40 als einfache Klirrkompensationsschaltung im Verbund aufzufassen, die besonders einfach unmittelbar im Signalweg des Nutzsignals N eine frequenzabhängige Kompensation des Laserklirrens zweiter Ordnung gestattet: Die starke Frequenzabhängigkeit des Laser-Klirrens zweiter Ordnung bei DFB-Lasern wird dadurch drastisch gemindert bzw. vollständig kompensiert, so daß bei einem die beschriebene Schaltungsanordnung aufweisenden Übertragungssystem der erreichbare Kanalmodulationsgrad beträchtlich erhöht wird, da keine aus dem Laser-Klirren zweiter Ordnung resultierenden Intermodulationsprodukte mehr auftreten. Dieser verbesserte Kanalmodulationsgrad des (Vielkanal)-Übertragungssystems erlaubt einen höheren Kanalmodulationsindex der Laserdiode 40, so daß ein leistungsstärkeres Laserwechsellicht in die Übertragungsstrecke 100 eingespeist werden kann: Eine Erhöhung des Kanalmodulationsgrades um das $\sqrt{2}$-fache ermöglicht typischerweise eine Erhöhung der Übertragungslänge um 3dB optisch mit sich, so daß die maximal erzielbare Reichweite in einem analog modulierten optischen (Vielkanal)-Übertragungssystem, insbesondere in einem CATV-Übertragungssystem, deutlich erhöht wird.

Das in Figur 1 dargestellte erste Ausführungsbeispiel einer Schaltungsanordnung zur Kompensation des Klirrens zweiter Ordnung in einem Übertragungssystem zeichnet sich also dadurch aus, daß die Kompensation des Laserklirrens zweiter Ordnung frequenzabhängig und unmittelbar im Signalweg des Nutzsignals vom Gegentakt-AB-Treiberverstärker 10 zur Analog-DFB-Laserdiode 40 erfolgt. Außerdem wird der zur Intensitätsmodulation der Analog-DFB-Laserdiode 40 ohnehin erforderliche Gegentakt-AB-Treiberverstärker 10 zur Erzeugung des das Laser-Klirren kompensierenden Signals verwendet, so daß zur schaltungstechnischen Durchführung der Klirrkorrektur nur ein äußerst geringer Aufwand an zusätzlichen Bauteilen erforderlich ist.

Das in Figur 2 dargestellte zweite Ausführungsbeispiel einer Schaltungsanordnung zur Kompensation des Klirrens zweiter Ordnung einer Analog-DFB-Laserdiode gliedert sich im wesentlichen in zwei Funktionsblöcke: Der mit 1 bezeichnete und in Figur 1 strichliert dargestellte erste Funktionsblock der Figur 2 stellt im wesentlichen die frequenzabhängige Klirrkompensation des ersten Ausführungsbeispiels dar. Zur weiteren Verbesserung der Linearisierung ist dem ersten Funktionsblock 1 ein zweiter Funktionsblock 2 vorgeschaltet, der eine frequenzunabhängige Klirrkompensation durchführt. Zu diesem Zweck weist der zweite Funktionsblock 2 ein frequenzunabhängig bzw. frequenzabhängig arbeitendes erstes Stellelement 60 auf, dessen Eingang 61 über einen ersten Schalter 70 das Nutzsignal N zugeführt wird. Ein Ausgang 62 des ersten Stellelements 60 ist mit einem Eingang 81 einer Verzerrerstufe 80 verbunden ist. An einem Ausgang 82 der Verzerrerstufe 80 ist ein Eingang 86 eines frequenzunabhängig bzw. invers frequenzabhängig arbeitenden zweiten Stellelements 85 angeschlossen. An dessen Ausgang 87 liegt ein Eingang 91 eines weiteren Phasen-Anpassungsglieds 90 an, dessen Ausgang 92 mit einem ersten Eingang 111 eines zweiten Schalters 110 in Verbindung steht. Ein zweiter Eingang 112 des zweiten Schalters 110 ist über ein Dämpfungsglied 106 mit einem zweiten Ausgang 72 des ersten Schalters verbunden. Durch diese Verbindung des ersten Schalters
70 mit dem zweiten Schalter 90 wird erreicht, daß wahlweise die Verzerrerstufe 80 mit dem nachgeschalteten
weiteren Phasen-Anpassungsglied 90 pegelgleich aber
nicht linearisiert überbrückt werden kann. Ein Ausgang
113 des zweiten Schalters 110 ist mit dem Eingang 11
des Gegentakt-AB-Treiberverstärkers 10 der ersten
Funktionseinheit 1 verbunden.

Durch die funktionale Aufteilung der Schaltungsanordnung des zweiten Ausführungsbeispiels in zwei
Funktionsblöcke 1 und 2 wird erreicht, daß im zweiten
Funktionsblock 2 zuerst der frequenzflache Anteil des
Laser-Klirrens zweiter Ordnung primär frequenzunabhängig und ggf.frequenzabhängig vorkompensiert wird.
Das danach verbleibende und bereits um seinen frequenzflachen Anteil reduzierte frequenzabhängige Klirren wird dann - wie oben beschrieben - durch den der
Schaltungsanordnung des ersten Ausführungsbeispiels
entsprechenden ersten Funktionsblock 1 bewerkstelligt.

In der Verzerrerstufe 80 findet bei der Klirrkompensation einer DFB-Laserdiode zweckmäßigerweise ein
GaAs-Feldeffekttransistor 83 Verwendung, da dieser eine linksgekrümmte quadratische Eingangskennlinie
aufweist, welche im wesentlichen zur rechtsgekrümmten P/I-Kennlinie der DFB-Laserdiode 40 komplementär
ist.

Bei der beschriebenen Ausbildung der Verzerrerstufe 80 mit einem GaAs-Feldeffekttransistor 83 stehen
dann drei Freiheitsgrade zur Verfügung, durch deren
Variation das von der Verzerrerstufe 80 erzeugte Verzerrer-Klirren zweiter Ordnung dem Laser-Klirren angepaßt werden kann:
Zum ersten wird das Klirren der Verzerrerstufe 80 vom
Typ des Feldeffekttransistors 83 selbst beeinflußt. Zum
zweiten bestimmt der gewählte Arbeitspunkt des Feldeffekttransistors 83 wesentlich das Klirren der Verzerrerstufe 80 mit. Und zum dritten ist das Verzerrer-Klirren
vom Pegel des dem Feldeffekttransistor 83 zugeführten
Nutzsignals N, also von seinem Eingangspegel, abhängig. Durch eine geeignete Variation dieser drei Stellgrößen ist es somit möglich, das Verzerrer-Klirren dem Klirren der Analog-DFB-Laserdiode 40 anzupassen. Die
Funktionsweise des zweiten Funktionsblocks 2 ist nun
wie folgt: In der Verzerrerstufe 80 wird ein Klirren zweiter
Ordnung erzeugt, indem der Eingangspegel des Nutzsignals N mit Hilfe des ersten Stellelements 60 frequenzunabhängig bzw. -abhängig erhöht oder erniedrigt und somit das vom GaAs-Feldeffekttransistor 83 der
Verzerrerstufe 80 erzeugte Klirren zweiter Ordnung entsprechend modifiziert wird.

Das zweite Stellelement 85 wirkt der Veränderung
des Eingangspegels des Nutzsignals N durch das erste
Stellelement 60 genau entgegen und kompensiert damit
die durch dieses Stellelement 60 bedingte unterschiedliche Einfügedämpfung, so daß am Ausgang 111 des
zweiten Funktionsblocks 2 die gleichen Pegelverhältnisse des Nutzsignals N wie am zweiten Eingang 112
des zweiten Schalters 110 auftreten. Damit wird eine
konstante Einfügedämpfung der aus den beiden Stellelementen 60 und 85 und der Verzerrerstufe 80 gebildeten Funktionseinheit erreicht, die unabhängig vom
gewählten Eingangspegel des Nutzsignals N in die Verzerrerstufe 80 ist.

Eine Alternative hierzu, welche sich durch ihren geringeren Aufwand an Bauelementen und durch ihre einfachere Justage auszeichnet, ist wie folgt:

Der GaAs-Feldeffekttransistor 83 der Verzerrerstufe 80 wird in Übereinstimmung mit der Analog-DFB-Laserdiode 40 derart gewählt, daß sich diese beiden Elemente des Übertragungssystems in ihrem Klirrverhalten
zweiter Ordnung möglichst gut entsprechen: Laserdioden mit relativ guter Linearität zweiter Ordnung benötigen deshalb einen ebensolchen relativ linearen GaAs-
Feldeffekttransistor, wohingegen bei Laserdioden mit
einer relativ schlechten Linearität zweiter Ordnung ein
Feldeffekttransistor 83 verwendet wird, der relativ hohe
Klirrbeiträge zweiter Ordnung liefert. Diese Maßnahme
besitzt den Vorteil, daß der Grobabgleich der Verzerrerstufe 80 durch die Auswahl des Feldeffekttransistors 83
erfolgt. Zum Feinabgleich der Verzerrerstufe 80 bedarf
es lediglich einer Veränderung des Arbeitspunktes des
Feldeffekttransistors 83. Die beiden Stellelemente 60
und 85 entfallen bei dieser Variante teilweise bzw. vollständig.

Um die frequenzunabhängige Kompensation des
Laser-Klirrens zweiter Ordnung lediglich durch eine Variation des Feldeffekttransistor-Arbeitspunktes durchführen zu können, wird die Verzerrerstufe 80 an einer
Stelle des Signalwegs des Nutzsignals N angeordnet,
an der der Feldeffekttransistor 83 von den Pegelverhältnissen des Nutzsignals N her noch in der Lage ist, aufgrund eines relativ geringen Eingangspegels (vorzugsweise ca. 75-85dBuV), relativ gute Werte für das Klirren
zweiter Ordnung aufzuweisen (ca. 50-68dB, je nach Typ
und Arbeitspunkt). Vorzugsweise ist vorgesehen, daß
der Feldeffekttransistor 83 der Verzerrerstufe 80 derart
betrieben wird, daß er einen Verstärkungsfaktor von
eins aufweist und phaseninvertierend wirkt. Dies ist insbesondere dann von Vorteil, wenn - wie oben beschrieben -das erste und das zweite Stellglied 60 und 85 entfallen. Das Dämpfungsglied 106 entfällt dann ebenfalls.
Um betragsmäßig richtige Klirrwerte zu erreichen ist der
Feldeffekttransistor 83 - wie in Figur 2 dargestellt - im
Signalweg des Nutzsignals N vor dem Gegentakt-AB-
Treiberverstärker 10 angeordnet und zweckmäßigerweise ein- und ausgangsseitig auf 50 bzw. 75 Ohm angepaßt.

Die Adjustierung der beschriebenen Schaltungsanordnung zur Kompensation des Laser-Klirrens zweiter
Ordnung ist nun wie folgt:

In einem ersten Schritt wird die Analog-DFB-Laserdiode 40 auf den gewünschten Arbeitspunkt und den
gewünschten Kanalmodulationsgrad eingestellt.

In einem zweiten Schritt wird das von der Analog-DFB-Laserdiode 40 emittierte Licht in einem optischen Referenzempfänger detektiert und das dem übertragenen Lasersignal überlagerte Klirren zweiter Ordnung ausgewertet. Hierbei ist vorgesehen, daß in diesem zweiten Schritt die zweite Funktionseinheit 2 außer Funktion gesetzt ist, indem das Nutzsignal N über den zweiten Ausgang 72 des ersten Schalters 70 direkt zum zweiten Eingang 112 des zweiten Schalters 110 geleitet wird, so daß die Verzerrerstufe 80 und das weitere Phasen-Anpassungsglied 90 überbrückt werden. Außerdem ist vorgesehen, daß im zweiten Schritt das vom Gegentakt-AB-Treiberverstärker 10 erzeugte, mit dem Verstärker-Klirren zweiter Ordnung überlagerte Signal das Phasen-Anpassungsglied 20 ohne Modifikationen durchläuft, so daß eine Schaltungssituation gegeben ist, die der eines Übertragungsystems ohne die beschriebenen Klirr-Kompensationseinrichtungen entspricht.

In einem dritten Schritt wird das Phasen-Anpassungsglied 20 aktiviert, so daß nun - im Vergleich zu der beim zweiten Verfahrensschritt herrschenden Situation - eine Inversion der Phasenlage des Verstärker-Klirrens zweiter Ordnung erreicht wird. Das von der Analog-DFB-Laserdiode 40 emittiert Licht wird wiederum im optischen Referenzempfänger registriert und analysiert. In einer geeigneten, dem Fachmann bekannten Elektronik werden die beiden Klirrspektren nun dahingehend miteinander verglichen, ob eine Inversion der Phasenlage des Verstärker-Klirrens eine Verminderung des im optischen Referenzempfänger registrierten Klirrens zweiter Ordnung mit sich bringt oder nicht, d.h. ob das Verstärker-Klirren inhärent in Mitphase oder in Gegenphase zum Laser-Klirren zweiter Ordnung auftritt. Je nach dem Ergebnis des Vergleichs der beiden Klirrspektren bleibt für den weiteren Ablauf des Verfahrens das Phasen-Anpassungsglied 20 aktiviert oder deaktiviert.

Durch diese drei o.g. Schritte ist es somit leicht möglich, frequenzabhängig das Klirren zweiter Ordnung der Analog-DFB-Laserdiode 40 zu reduzieren oder zu kompensieren. Falls das mit den ersten drei Schritten erzielte Ergebnis für den gewünschten Einsatzzweck ausreichend ist, so genügt es, eine Schaltungsanordung gemäß dem ersten Ausführungsbeispiel einzusetzen. Die Justage ist somit für eine derartige Schaltungsanordnung beendet.

Falls jedoch nach der oben beschriebenen Vorgenswseise noch ein frequenzunabhängiges Klirren zweiter Ordnung der Laserdiode 40 zurückbleibt und dieses sich für den gewählten Einsatzzweck des Übertragungssystems als nicht tolerabel erweist, so ist eine Schaltungsanordung gemäß dem zweiten Ausführungsbeispiel einzusetzen, bei der noch folgende Justageschritte durchzuführen sind:

In einem vierten Schritt wird das in die zweite Funktionseinheit 2 eingespeiste Nutzsignal N über die Verzerrerstufe 80 und das weitere Phasen-Anpassungsglied 90 geleitet, indem das Nutzsignal N vom Eingang des ersten Schalters 70 über dessen ersten Ausgang 71 und über den ersten Eingang 111 des zweiten Schalters 110 zu dessen Ausgang 113 geleitet wird, so daß die Überbrückung der Verzerrerstufe 80 und des weiteren Phasen-Anpassungsglieds 90 aufgehoben wird.

Das am Ausgang des zweiten Funktionsblocks 2 auftretende Signal wird nun über einen in Figur 2 nicht dargestellten elektrischen Meßausgang gemessen und in einer geeigneten Elektronikschaltung analysiert, um das von der Verzerrerstufe 80 erzeugte Verzerrer-Klirren zweiter und dritter Ordnung zu registrieren. Durch eine entsprechende Betätigung der beiden Stellelemente 60 und 85 oder - wie alternativ oben ausgeführt - einen Abgleich der Bias-Spannung des Feldeffekttransistors 83 der Verzerrerstufe 80 und ggf. durch einen Typentausch des Feldeffekttransistors wird das Verzerrer-Klirren derart eingestellt, daß ein dem verbleibenden frequenzunabhängigen Laser-Klirranteil möglichst betragsgleiches frequenzunabhängiges Verzerrer-Klirren zweiter Ordnung auftritt. Bei dieser Justage ist außerdem zu beachten, daß bei diesem Abgleich der Verzerrerstufe 80 keine Situation eintritt, bei der die Beiträge dritter Ordnung zum Verzerrer-Klirren ein nicht mehr tolerables Maß erreichen. Anschließend wird das nun von der Analog-DFB-Laserdiode 40 emittierte Licht im optischen Referenzempfänger gemessen und die Klirrbeiträge zweiter und dritter Ordnung werden registriert.

In einem fünften Schritt wird das der Verzerrerstufe 80 nachgeschaltete weitere Phasen-Anpassungsglied 90 der zweiten Funktionseinheit 2 aktiviert, so daß die Phasenlage des Verzerrer-Klirrens im Vergleich zum fünften Schritt invertiert oder modifziert wird. Die im vierten Schritt beschriebenen Maßnahmen werden nun nochmals durchgeführt.

In einem sechsten Schritt werden die Beiträge des Klirrens zweiter und dritter Ordnung bei deaktiviertem weiteren Phasen-Anpassungsglied 90 mit denen bei einem aktivierten Phasen-Anpassungsglied 90 verglichen. Die im Hinblick auf eine Minimierung des frequenzunabhängigen Anteils des Klirrens zweiter Ordnung optimalere Schaltungskonfiguration wird beibehalten.

Zusammenfassend ist festzustellen, daß die beschriebenen Schaltungsanordnungen sowie das aufgeführte Verfahren besonders einfach eine Kompensation des Laser-Klirrens zweiter Ordnung unmittelbar im Signalpfad des in die Übertragungsstrecke einzuspeisenden Nutzsignals N ermöglichen. Hierbei ist noch anzuführen, daß die beschriebene Schaltungsanordnung und das Verfahren nicht nur bei einem optischen Sender - wie ihn die Analog-DFB-Laserdiode 40 darstellt - einsetzbar ist. Vielmehr ist es auch möglich, die beschriebene Kompensation des Klirrens zweiter Ordnung auch bei einem elektromagentischen Sender - z.B. bei einem breitbandigen CATV-Koaxial-Verstärker einzusetzen. Dem Fachmann sind die hierfür erforderlichen Modifikationen aufgrund der obigen Beschreibung leicht ersichtlich, so daß hier eine detaillierte Aufzählung der - lediglich minimalen - Änderungen überflüssig ist.

Desweiteren ist es möglich,den ersten Funktionsblock 1 und/oder den zweiten Funktionsblock 2 im Signalweg des Nutzsignals N zu kaskadieren, so daß eine mehrstufige Kompensation des Laser-Klirrens zweiter Ordnung erreicht wird.

Es ist auch möglich, eine entsprechende Schaltungsanordnung im empfängerseitigen Teil des Übertragungssystems einzusetzen. Dem Fachmann sind die hierbei erforderlichen Modifikationen leicht ersichtlich, so daß auf eine detaillierte Beschreibung an dieser Stelle verzichtet werden kann.

**Patentansprüche**

1. Schaltungsanordnung zur frequenzabhängigen Kompensation des Klirrens zweiter Ordnung in einem Übertragungssystem, das einen Treiberverstärker aufweist, welcher ein zu übertragendes Nutzsignal auf einen elektrischen oder optischen Sender intensitätsmoduliert, und bei dem der elektrische oder optische Sender dem Nutzsignal ein frequenzabhängiges Klirren zweiter Ordnung überlagert, **dadurch gekennzeichnet**, daß als Treiberverstärker ein Gegentakt-Verstärker (10) verwendet wird, der ein von der Frequenz des ihm zugeführten Nutzsignals (N) abhängiges Verstärker-Klirren zweiter Ordnung erzeugt, und daß im Signalweg des Nutzsignals (N) zwischen dem Gegentakt-Verstärker (10) und dem Sender (40) ein Klirr-Anpassungsglied (20,30) angeordnet ist, welches das vom Gegentakt-Verstärker (10) gelieferte, mit einem frequenzabhängigen Verstärker-Klirren zweiter Ordnung überlagerte Nutzsignal (N) zur Kompensation des Sender-Klirrens derart modifiziert, daß das frequenzabhängige Verstärker-Klirren zweiter Ordnung in Gegenphase zu dem vom Sender (40) erzeugten frequenzabhängigen Sender-Klirren zweiter Ordnung ist und in seinem Betrag mit diesem übereinstimmt.

2. Schaltungsanordnung nach Anspruch 1, dadurch gekennzeichnet, daß das im Nutzsignal-Signalweg zwischen dem Gegentakt-Verstärker (10) und dem Sender (40) angeordnete Klirr-Anpassungsglied ein Phasen-Anpassungsglied (20) und ein Klirrpegel-Anpassungsglied (30) aufweist.

3. Schaltungsanordnung nach Anspruch 2, dadurch gekennzeichnet, daß als Phasen-Anpassungsglied (20) ein als Phaseninverter wirkender Übertrager und/oder ein Allpaß verwendet wird.

4. Schaltungsanordnung nach Anspruch 1, dadurch gekennzeichnet, daß der Gegentakt-Verstärker (10) eine Gegentaktstufe (13;14) aufweist, die im Klirren zweiter Ordnung gegenüber der anderen (14;13) der beiden Gegentaktstufen (13,14) des Gegentakt-Verstärkers (10) dominant ist.

5. Schaltungsanordnung nach einem der Ansprüche 1 bis 4, dadurch gekennzeichnet,daß der Gegentakt-Verstärker (10) als ein Gegentakt-AB-Verstärker ausgebildet ist.

6. Schaltungsanordnung nach Anspruch 1, dadurch gekennzeichnet, daß im Signalweg des Nutzsignals (N) ein Funktionsblock (2) angeordnet ist, der eine Vorkompensation des Klirrens zweiter Ordnung durchführt.

7. Schaltungsanordnung nach Anspruch 6, dadurch gekennzeichnet, daß der Funktionsblock (2) eine Verzerrerstufe (80) aufweist, die einen Feldeffekttransistor (83) enthält, dessen quadratische Eingangskennlinie zur P/I-Kennlinie des Senders (40) komplementär verläuft.

8. Schaltungsanordnung nach Anspruch 7, dadurch gekennzeichnet, daß die Verzerrerstufe (80) einen GaAs-Feldeffekttransistor (83) enthält, und daß der optische Sender eine Analog-DFB-Laserdiode (40) aufweist.

9. Schaltungsanordnung nach einem der Ansprüche 6 bis 8, dadurch gekennzeichnet, daß die Verzerrerstufe (80) zwischen einem den Signalpegel des Nutzsignals (N) frequenzunabhängig oder frequenzabhängig verändernden ersten Stellelement (60) und einem zweiten Stellelement (85), das frequenzunabhängig oder invers frequenzunabhängig eine Kompensation der durch das erste Stellelement (60) bewirkten Einfügedämpfung des Nutzsignals (N) durchführt, angeordnet ist, so daß eine vom Verzerrungsgrad unabhängige Gesamtdämpfung des Nutzsignals (N) erreichbar ist.

10. Schaltungsanordnung nach einem der Ansprüche 6 bis 9, dadurch gekennzeichnet, daß zwischen der Verzerrerstufe (80) und dem Gegentakt-Treiberverstärker (10) ein weiteres Phasen-Anpassungsglied (90) angeordnet ist.

11. Schaltungsanordnung nach Anspruch 10, dadurch gekennzeichnet, daß das weitere Phasen-Anpassungsglied (90) als Phaseninverter oder als Allpaß ausgebildet ist.

12. Schaltungsanordnung nach einem der Ansprüche 6 bis 10, dadurch gekennzeichnet, daß eine Überbrückungsschaltung (70,72;106;110,112) vorgesehen ist, durch die das Nutzsignal (N) an der Verzerrerstufe (80) und dem weiteren Phasen-Anpassungsglied (90) pegelgleich und nicht-linearisiert vorbeileitbar ist.

**13.** Schaltungsanordnung nach Anspruch 12, dadurch gekennzeichnet, daß die Überbrückungsschaltung ein Dämpfungsglied (106) aufweist.

**14.** Schaltungsanordnung nach Anspruch 6, dadurch gekennzeichnet, daß der Funktionsblock (2) im Signalweg des Nutzsignals (N) vor dem Gegentakt-Verstärker (10) angeordnet ist.

**15.** Schaltungsanordnung nach einem der Ansprüche 1 bis 14, dadurch gekennzeichnet, daß das Nutzsignal (N) ein analoges Signal ist.

**16.** Übertragungssystem, gekennzeichnet durch die Verwendung einer Schaltungsanordnung nach mindestens einem der Ansprüche 1 bis 15 im sender- oder empfängerseitigen Teil des Übertragungssystems.

**Claims**

**1.** Circuit arrangement for frequency-dependent compensation of second-order distortion in a transmission system comprising a driver amplifier which intensity-modulates a useful signal to be transmitted onto an electrical or optical transmitter, and in which the electrical or optical transmitter superimposes a frequency-dependent second-order distortion on the useful signal,
characterized in that the driver amplifier used is a push-pull amplifier (10) which generates a second-order amplifier distortion dependent on the frequency of the useful signal (N) fed to it, and in that there is disposed in the path of the useful signal (N) between the push-pull amplifier (10) and the transmitter (40) a distortion-matching device (20, 30) which, in order to compensate for the transmitter distortion, modifies the useful signal (N) supplied by the push-pull amplifier (10) and having a frequency-dependent second-order amplifier distortion superimposed on it in such a way that the frequency-dependent second-order amplifier distortion is in phase opposition to the frequency-dependent second-order transmitter distortion generated by the transmitter (40) and is equal in its magnitude to said distortion.

**2.** Circuit arrangement according to Claim 1, characterized in that the distortion matching element disposed in the signal path of the useful signal between the push-pull amplifier (10) and the transmitter (40) comprises a phase-matching element (20) and a distortion-level-matching element (30).

**3.** Circuit arrangement according to Claim 2, characterized in that a transformer acting as a phase inverter and/or an all-pass filter are/is used as phase-matching element (20).

**4.** Circuit arrangement according to Claim 1, characterized in that the push-pull amplifier (10) comprises a push-pull stage (13; 14) which is dominant in the second-order distortion with respect to the other push-pull stage (14; 13) of the two push-pull stages (13, 14) of the push-pull amplifier (10).

**5.** Circuit arrangement according to one of Claims 1 to 4,
characterized in that the push-pull amplifier (10) is designed as push-pull class-AB amplifier.

**6.** Circuit arrangement according to Claim 1, characterized in that there is disposed in the signal path of the useful signal (N) a function block (2) which carries out a precompensation of the second-order distortion.

**7.** Circuit arrangement according to Claim 6, characterized in that the function block (2) comprises a distortion stage (80) containing a field-effect transistor (83) whose quadratic input characteristic is complementary to the P/I characteristic of the transmitter (40).

**8.** Circuit arrangement according to Claim 7, characterized in that the distortion stage (80) contains a GaAs field-effect transistor (83) and in that the optical transmitter comprises an analog DFB laser diode (40).

**9.** Circuit arrangement according to one of Claims 6 to 8, characterized in that the distortion stage (80) is disposed between a first control element (60), which alters the signal level of the useful signal (N) in a frequency-independent or frequency-dependent manner, and a second control element (85), which compensates for the insertion loss of the useful signal (N) due to the first control element (60) in a frequency-independent manner or in an inversely frequency-independent manner, so that an overall attenuation of the useful signal (N) can be achieved which is independent of the degree of distortion.

**10.** Circuit arrangement according to one of Claims 6 to 9,
characterized in that a further phase-matching element (90) is disposed between the distortion stage (80) and the push-pull driver amplifier (10).

**11.** Circuit arrangement according to Claim 10, characterized in that the further phase-matching element (90) is designed as phase inverter or as an all-pass filter.

**12.** Circuit arrangement according to one of Claims 6 to 10, characterized in that a bypass circuit (70, 72; 106; 110, 112) is provided through which the useful signal (N) can be fed to the distortion stage (80) and the further phase-matching element (90) in an equal-level and nonlinearized form.

13. Circuit arrangement according to Claim 12, characterized in that the bypass circuit comprises an attenuation element (106).

14. Circuit arrangement according to Claim 6, characterized in that the function block (2) is disposed in the signal path of the useful signal (N) upstream of the push-pull amplifier (10).

15. Circuit arrangement according to one of Claims 1 to 14, characterized in that the useful signal (N) is an analog signal.

16. Transmission system, characterized by the use of a circuit arrangement according to at least one of Claims 1 to 15 in the transmitter-end or receiver-end section of the transmission system.

**Revendications**

1. Circuit pour la compensation de la distorsion du second ordre en fonction de la fréquence dans un système de transmission présentant un amplificateur d'attaque qui module en intensité un signal utile à transmettre sur un émetteur électrique ou optique et dans lequel l'émetteur électrique ou optique superpose au signal utile une distorsion du second ordre en fonction de la fréquence, caractérisé en ce que comme amplificateur d'attaque, on utilise un amplificateur symétrique (10) qui génère une distorsion de l'amplificateur en fonction de la fréquence du signal utile (N) qui lui est amené et en ce que, sur le trajet du signal utile (N), entre l'amplificateur symétrique (10) et l'émetteur (40) est disposé un adaptateur de distorsion (20, 30) qui modifie le signal utile (N) délivré par l'amplificateur symétrique (10), superposé à une distorsion de l'amplificateur du second ordre en fonction de la fréquence et destiné à la compensation de la distorsion de l'émetteur de telle sorte que la distorsion de l'amplificateur du second ordre en fonction de la fréquence est en opposition de phase avec la distorsion de l'émetteur du second ordre en fonction de la fréquence, générée par l'émetteur (40) et coïncide avec la distorsion de l'émetteur par sa valeur.

2. Circuit selon la revendication 1, caractérisé en ce que l'adaptateur de distorsion disposé sur le trajet du signal utile entre l'amplificateur symétrique (10) et l'émetteur (40) présente un adaptateur de phase (20) en un adaptateur du niveau de distorsion (30).

3. Circuit selon la revendication 2, caractérisé en ce que comme adaptateur de phase (20), on utilise un transformateur ayant la fonction d'un inverseur de phase et/ou un passe-tout.

4. Circuit selon la revendication 1, caractérisé en ce que l'amplificateur symétrique (10) présente un étage symétrique (13 ; 14) qui dans la distorsion du second ordre, est dominant par rapport à l'autre (14 ; 13) des deux étages symétriques (13, 14) de l'amplificateur symétrique (10).

5. Circuit selon l'une quelconque des revendications 1 à 4, caractérisé en ce que l'amplificateur symétrique (10) est conçu comme un amplificateur symétrique classe AB.

6. Circuit selon la revendication 1, caractérisé en ce que sur le trajet du signal utile (N) est disposé un bloc fonctionnel (2) qui effectue une précompensation de la distorsion du second ordre.

7. Circuit selon la revendication 6, caractérisé en ce que le bloc fonctionnel (2) présente un étage de distorsion (80) qui comporte un transistor à effet de champ (83) dont la courbe caractéristique d'entrée est complémentaire de la courbe caractéristique P/I de l'émetteur (40).

8. Circuit selon la revendication 7, caractérisé en ce que l'étage de distorsion (80) comporte un transistor à effet de champ au GaAs (83) et en ce que l'émetteur optique présente une diode laser DFB analogique (40).

9. Circuit selon l'une quelconque des revendications 6 à 8, caractérisé en ce que l'étage de distorsion (80) est disposé entre un premier élément de réglage (60) modifiant le niveau du signal utile (N) indépendamment de la fréquence ou en fonction de la fréquence et un second élément de réglage (85) qui, en fonction de la fréquence ou à l'inverse indépendamment de la fréquence, effectue une compensation de l'affaiblissement d'insertion du signal utile (N) opéré par le premier élément de réglage (60) si bien qu'un affaiblissement global du signal utile (N) indépendant du degré de distorsion peut être obtenu.

10. Circuit selon l'une quelconque des revendications 6 à 9, caractérisé en ce qu'un autre adaptateur de phase (90) est disposé entre l'étage de distorsion (80) et l'amplificateur d'attaque symétrique (10).

11. Circuit selon la revendication 10, caractérisé en ce que l'autre adaptateur de phase (90) est conçu comme inverseur de phase ou comme passe-tout.

12. Circuit selon l'une quelconque des revendications 6 à 10, caractérisé en ce qu'il est prévu un circuit de pontage (70, 72 ; 106 110, 112) par lequel le signal utile (N) peut passer à côté de l'étage de distorsion (80) et de l'autre adaptateur de phase (90), avec un niveau identique et non linéarisé.

**13.** Circuit selon la revendication 12, caractérisé en ce que le circuit de pontage présente un affaiblisseur (106).

**14.** Circuit selon la revendication 6, caractérisé en ce que le bloc fonctionnel (2) est disposé sur le trajet du signal utile (N) avant l'amplificateur symétrique (10).

**15.** Circuit selon l'une quelconque des revendications 1 à 11, caractérisé en ce que le signal utile (N) est un signal analogique.

**16.** Système de transmission caractérisé par l'utilisation d'un circuit, selon au moins l'une quelconque des revendications 1 à 15, dans la partie côté émetteur ou récepteur du système de transmission.

FIG.1

FIG.2